(19) Europäisches Patentamt
European Patent Office
Office européen des brevets

(11) **EP 4 044 032 A1**

(12) **EUROPEAN PATENT APPLICATION**

(43) Date of publication:
**17.08.2022 Bulletin 2022/33**

(21) Application number: **22160276.6**

(22) Date of filing: **04.03.2022**

(51) International Patent Classification (IPC):
***G06F 9/50*** *(2006.01)*

(52) Cooperative Patent Classification (CPC):
**G06F 9/5066;** G06F 2209/5017; G06F 2209/509

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2021 CN 202110558344**

(71) Applicant: **BEIJING BAIDU NETCOM SCIENCE TECHNOLOGY CO., LTD.**
**No. 10 Shangdi 10th Street**
**Haidian District**
**Beijing 100085 (CN)**

(72) Inventors:
• **CONG, Shijun**
**Beijing, 100085 (CN)**
• **WANG, Guibin**
**Beijing, 100085 (CN)**
• **CHEN, Xu**
**Beijing, 100085 (CN)**

(74) Representative: **advotec.**
**Patent- und Rechtsanwaltspartnerschaft**
**Tappe mbB**
**Widenmayerstraße 4**
**80538 München (DE)**

(54) **METHOD AND APPARATUS FOR PROCESSING DATA, ELECTRONIC DEVICE AND STORAGE MEDIUM**

(57)     A method for processing data includes: obtaining initial data; extracting data characteristics of the initial data; generating, based on the data characteristics, an initial memory consumption value required by a graphics processing unit (GPU) for processing the initial data; generating a recommendation processing parameter based on the initial memory consumption value; and obtaining target data by processing the initial data based on the recommendation processing parameter.

EP 4 044 032 A1

```
┌──────────────────────────────────────────────┐
│ obtaining initial data and extracting data     │──── S101
│ characteristics of the initial data            │
└──────────────────────────────────────────────┘
                     │
                     ▼
┌──────────────────────────────────────────────┐
│ generating, based on the data characteristics, │──── S102
│ an initial memory consumption value required   │
│ by a graphics processing unit (GPU) for        │
│ processing the initial data                    │
└──────────────────────────────────────────────┘
                     │
                     ▼
┌──────────────────────────────────────────────┐
│ generating a recommendation processing         │──── S103
│ parameter based on the initial memory          │
│ consumption value                              │
└──────────────────────────────────────────────┘
                     │
                     ▼
┌──────────────────────────────────────────────┐
│ obtaining target data by processing the initial│──── S104
│ data based on the recommendation processing    │
│ parameter                                      │
└──────────────────────────────────────────────┘
```

FIG. 1

## Description

## TECHNICAL FIELD

The disclosure relates to the field of computer technologies, specifically to the field of artificial intelligence (AI) technologies such as deep learning and big data processing, and in particular to a method for processing data, an apparatus for processing data, an electronic device and a storage medium.

## BACKGROUND

AI is a discipline that allows computers to simulate certain thinking processes and intelligent behaviors (such as learning, reasoning, thinking and planning) of people, which has both hardware-level technologies and software-level technologies. AI hardware technologies includes technologies such as sensors, dedicated AI chips, cloud computing, distributed storage and big data processing. AI software technologies includes computer vision technology, speech recognition technology, natural language processing technology, and machine learning, deep learning, big data processing technology, knowledge graph technology and other major directions.
In the related art, when a graphics processing unit (GPU) is used to process data to assist in model training, a memory consumption of the GPU for processing data is relatively high, thereby affecting an efficiency of the GPU in processing data.

## SUMMARY

The disclosure provides a method for processing data, an apparatus for processing data, an electronic device, a storage medium and a computer program product.
According to a first aspect of the disclosure, a method for processing data is provided. The method includes: obtaining initial data; extracting data characteristics of the initial data; generating, based on the data characteristics, an initial memory consumption value required by a graphics processing unit (GPU) for processing the initial data; generating a recommendation processing parameter based on the initial memory consumption value; and obtaining target data by processing the initial data based on the recommendation processing parameter.
Optionally, extracting the data characteristics of the initial data includes: obtaining a plurality of initial data segments by segmenting the initial data; and determining frame length difference information between the plurality of initial data segments as the data characteristics of the initial data.
Optionally, determining the frame length difference information between the plurality of initial data segments includes: determining a first batch size corresponding to the plurality of initial data segments; determining a plurality of data frame lengths corresponding to the plurality of initial data segments; and determining the frame length difference information between the plurality of initial data segments based on the first batch size and the plurality of data frame lengths.
Optionally, generating, based on the data characteristics, the initial memory consumption value required by the GPU for processing the initial data includes: determining a number of initial data segments with a maximum data frame length based on the plurality of data frame lengths; and generating, based on the number and the first batch size, the initial memory consumption value required by the GPU for processing the initial data.
Optionally, generating the recommendation processing parameter based on the initial memory consumption value includes: generating a second batch size based on the initial memory consumption value, the second batch size being the same as or different from the first batch size; and generating a plurality of target frame lengths based on the initial memory consumption value, and determining the second batch size and the plurality of target frame lengths as the recommendation processing parameter.
Optionally, obtaining the target data by processing the initial data based on the recommendation processing parameter includes: splicing the plurality of initial data segments into intermediate data; and obtaining a plurality of target data segments by segmenting the intermediate data based on the recommendation processing parameter, in which a batch size corresponding to the plurality of target data segments is the second batch size, a plurality of data frame lengths corresponding to the plurality of target data segments are the plurality of target frame lengths, and the plurality of target data segments together constitute the target data.
According to a second aspect of the disclosure, an apparatus for processing data is provided. The apparatus includes: an obtaining module, a first generating module, a second generating module and a processing module. The obtaining module is configured to obtain initial data and extract data characteristics of the initial data. The first generating module is configured to generate, based on the data characteristics, an initial memory consumption value required by a graphics processing unit (GPU) for processing the initial data. The second generating module is configured to generate a recommendation processing parameter based on the initial memory consumption value. The processing module is configured to obtain target data by processing the initial data based on the recommendation processing parameter.
Optionally, the obtaining module includes: an obtaining sub-module, configured to obtain the initial data; and a first determining sub-module, configured to obtain a plurality of initial data segments by segmenting the initial data and determine frame length difference information between the plurality of initial data segments as the data characteristics of the initial data.

Optionally, the first determining sub-module is further configured to: determine a first batch size corresponding to the plurality of initial data segments; determine a plurality of data frame lengths corresponding to the plurality of initial data segments; and determine the frame length difference information between the plurality of initial data segments based on the first batch size and the plurality of data frame lengths.

Optionally, the first generating module includes: a second determining sub-module, configured to determine a number of initial data segments with a maximum data frame length based on the plurality of data frame lengths; and a first generating sub-module, configured to generate, based on the number and the first batch size, the initial memory consumption value required by the GPU for processing the initial data.

Optionally, the processing module includes: a second generating sub-module, configured to generate a second batch size based on the initial memory consumption value, the second batch size being the same as or different from the first batch size; and a third generating sub-module, configured to generate a plurality of target frame lengths based on the initial memory consumption value, and determine the second batch size and the plurality of target frame lengths as the recommendation processing parameter.

Optionally, the processing module further includes: a segmenting sub-module, configured to splice the plurality of initial data segments into intermediate data and obtain a plurality of target data segments by segmenting the intermediate data based on the recommendation processing parameter, in which a batch size corresponding to the plurality of target data segments is the second batch size, a plurality of data frame lengths corresponding to the plurality of target data segments are the plurality of target frame lengths, and the plurality of target data segments together constitute the target data.

According to a third aspect of the disclosure, an electronic device is provided. The electronic device includes: at least one processor and a memory communicatively coupled to the at least one processor. The memory is configured to store instructions executable by the at least one processor, and when the instructions are executed by the at least one processor, the at least one processor is caused to perform the above method for processing data.

According to a fourth aspect of the disclosure, a non-transitory computer-readable storage medium having computer instructions stored thereon is provided. The computer instructions are configured to cause a computer to perform the above method for processing data.

According to a fifth aspect of the disclosure, a computer program product including a computer program is provided. When the computer program is executed by a processor, the above method for processing data is performed.

It should be understood that the content described in this section is not intended to identify key or important features of embodiments of the disclosure, nor is it intended to limit the scope of the disclosure. Additional features of the disclosure will be easily understood based on the following description.

**BRIEF DESCRIPTION OF THE DRAWINGS**

The drawings are used to better understand solutions and do not constitute a limitation to the disclosure, in which:

FIG. 1 is a schematic diagram of a first embodiment of the disclosure.
FIG. 2a is a schematic diagram of initial data according to some embodiments of the disclosure.
FIG. 2b is another schematic diagram of initial data according to some embodiments of the disclosure.
FIG. 3 is a schematic diagram of a second embodiment of the disclosure.
FIG. 4a is a schematic diagram of target data according to some embodiments of the disclosure.
FIG. 4b is another schematic diagram of target data according to some embodiments of the disclosure.
FIG. 5 is a schematic diagram of a third embodiment of the disclosure.
FIG. 6 is a schematic diagram of a fourth embodiment of the disclosure.
FIG. 7 is a block diagram of an example electronic device for performing a method for processing data according to embodiments of the disclosure.

**DETAILED DESCRIPTION**

The following describes embodiments of the disclosure with reference to the drawings, which includes various details of embodiments of the disclosure to facilitate understanding and shall be considered merely exemplary. Therefore, those of ordinary skill in the art should recognize that various changes and modifications can be made to embodiments described herein without departing from the scope of the disclosure. For clarity and conciseness, descriptions of well-known functions and structures are omitted in the following description.

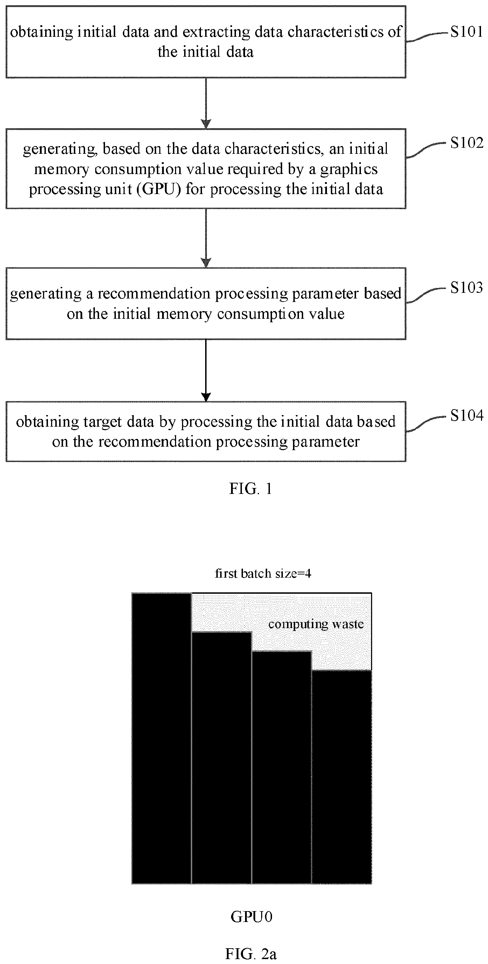

FIG. 1 is a schematic diagram of a first embodiment of the disclosure.

It should be noted that an execution body of the method for processing data provided in embodiments is an apparatus for processing data. The apparatus can be implemented by software and/or hardware. The apparatus can be configured in an electronic device. The electronic device may include, but is not limited to, a terminal, a server and the like.

Embodiments of the disclosure relate to AI technical fields such as deep learning and big data processing.

AI is a new technical science that studies and develops theories, methods, techniques and application systems for simulating, extending and expanding human intelligence.

Deep learning is to learn inherent laws and representation levels of sample data. The information obtained in these learning processes is of great help to interpretation of data such as text, images and sounds. The ultimate goal of deep learning is to enable machines to have an ability of analyzing and learning like humans and of recognizing data such as words, images and sounds.

Big data processing refers to a process of using AI to analyze and process a large amount of data, and big data can be summarized as 5 V, i.e., Volume, Velocity, Variety, Value and Veracity.

In some embodiments, the execution body of the method for processing data can obtain initial data in various public, legal and compliant ways, for example, the initial data can be obtained from a public data set or from users with authorizations of the users. The data may not reflect personal information of a particular user.

It should be noted that, the data in embodiments of the disclosure is obtained under conditions of compliance with relevant laws and regulations.

As shown in FIG. 1, the method for processing data includes the following.

In S101, initial data is obtained and data characteristics of the initial data are extracted.

The initial data can refer to data to be processed. The data can be, for example, voice data and image data. The initial data in embodiments of the disclosure can be, for example, voice data frame(s) of sample(s) for training AI model(s). The number of voice data frames may be one or more. A plurality of voice data frames may constitute the initial data, which is not limited herein.

The initial data may be, for example, a segment of voice data frames or a plurality of segments of voice data frames, that is, the number of pieces of initial data may be one or more, which is not limited herein.

In some embodiments, when obtaining the initial data, a plurality of data segments may be obtained from a sample data pool as the initial data. The data pool may be pre-built, which includes a plurality of different data segments (data frame lengths of different data segments may be different or the same). The plurality of data segments may be selected from the sample data pool and determined as the initial data or any other possible way may be adopted to obtain the initial data, which is not limited herein.

In other embodiments, data received via a data input interface (which may be, for example, an interface configured on an electronic device for receiving the initial data) may also be directly determined as the initial data, which is not limited herein.

In some embodiments of the disclosure, the initial data include a plurality of initial data segments. For example, the initial data can be a complete segment of voice data, and then the complete segment of voice data is segmented to obtain a plurality of voice data frames, which may be referred to as initial data segments, and data frame lengths of different voice data frames may be the same or different.

The data characteristics can describe the data characteristics corresponding to the initial data, such as the length corresponding to the initial data, the number of characters included in the initial data, which is not limited herein.

In some embodiments of the disclosure, when the initial data include a plurality of initial data segments, data frame lengths corresponding to different initial data segments and the batch size corresponding to the plurality of initial data segments (the batch size can be referred to as the first batch size such as the number of data segments), can be referred to as the data characteristics, which is not limited herein.

In some embodiments of the disclosure, the data characteristics corresponding to the initial data may be frame length difference information between the plurality of initial data segments. The frame length difference information can be used to describe the difference on frame lengths between the plurality of initial data segments. Since the data frame lengths of different initial data segments are the same or different, the frame length difference information between the plurality of initial data segments can be used as the data characteristics corresponding to the initial data.

The frame length difference information between the plurality of initial data segments is used as the data characteristics of the initial data, to assist in accurately estimating the initial memory consumption value required by the GPU for processing the initial data, and assist in generating the recommendation processing parameter having reference.

For example, the initial data include 2 initial data segments, respectively: data segment a, data segment b. A data frame length corresponding to data segment a is 128 and a data frame length corresponding to data segment b is 256. The difference information of the data frame lengths between data segment a and data segment b can be calculated, and the difference information of the data frame lengths can be used as the data characteristics of the initial data.

As shown in FIG. 2a, FIG. 2a is a schematic diagram of initial data according to some embodiments of the disclosure. The initial data include 4 initial data segments, the first batch size of the 4 initial data segments is 4, different initial data segments correspond to different data frame lengths, and the initial data corresponds to GPU 0, where 0 may be referred to as a serial number of the GPU. The initial data corresponds to one GPU, which means that GPU 0 can be used to process the 4 initial data segments included in the initial data.

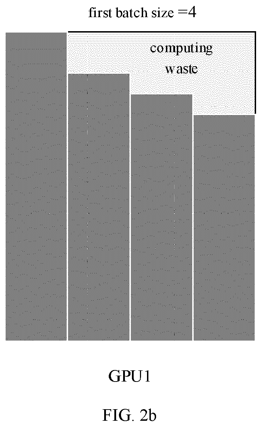

As shown in FIG. 2b, FIG. 2b is another schematic diagram of initial data according to some embodiments of the disclosure. The initial data include 4 initial data segments, the first batch size of the 4 initial data segments is 4, different initial data segments correspond to different data frame lengths, and the initial data corresponds to GPU 1, where 1 may be referred to as a serial number of the GPU. The initial data corresponds to one GPU, which means that GPU 1 can be used to process the 4 initial data segments included in the initial data. In FIG. 2a and FIG. 2b, different GPUs are used to process the input initial data at the same time, which can be applied to a streaming parallel computing scenario required by a model training scenario, and certainly, can also be applied to any other possible application scenarios, which is not limited herein.

It is known from the above-mentioned FIG. 2a and FIG. 2b, in the related art, when adopting the GPU for processing the initial data, the data frame lengths of different initial data segments are complemented and the model training is performed after the completion processing. In this way, if the difference information between the data frame lengths is large, a calculation amount required for the completion is generally large, so this manner in the related art will affect a memory consumption of the GPU.

Thus, in some embodiments of the disclosure, the initial data is segmented to obtain the plurality of initial data segments, the frame length difference information between the initial data segments is determined, and the frame length difference information is determined as the data characteristics of the initial data. The initial data is processed with reference to the frame length difference information between the plurality of initial data segments of the initial data, to assist in accurately estimating the initial memory consumption value required by the GPU for processing the initial data, and assist in generating the recommendation processing parameter having reference.

In S102, an initial memory consumption value required by a graphics processing unit (GPU) for processing the initial data is generated based on the data characteristics.

GPU, also known as a display core, a visual processor or a display chip, is a kind of microprocessor that specializes in image and graphics-related operations on personal computers, workstations, game consoles, and some mobile devices (such as tablet computers and smartphones). The GPU can be used for processing the initial data.

The memory consumption value for the GPU for processing the initial data may be referred to as the initial memory consumption value, and the memory consumption value may be used to describe a quantized value of memory consumption when processing the initial data in the data processing process.

It is understandable that in the process of processing the initial data, the GPU will generate a large amount of temporary (unprocessed, being processed and already processed) data. The GPU configures a storage area to store the above data, so that the memory consumption occupied by the above data and the consumption of computing resources can be referred to as the above memory consumption.

After the initial data are obtained and the data characteristics of the initial data are extracted, the initial memory consumption value required by the GPU for processing the initial data can be generated based on the data characteristics.

In some embodiments, after the initial data are obtained and the data characteristics of the initial data are extracted, the initial memory consumption value required by the GPU for processing the initial data can be determined based on the data characteristics of the initial data in combination with certain algorithm logic.

For example, when generating the initial memory consumption value required by the GPU for processing the initial data based on the data characteristics of the initial data, the initial memory consumption value can be determined based on a pre-trained memory consumption detection model. For example, the data characteristics corresponding to the initial data can be input into the pre-trained memory consumption detection model to obtain the initial memory consumption value output by the pre-trained memory consumption detection model, or the initial memory consumption value required by the GPU for processing the initial data may be generated based on the data characteristics in any other possible manner, which is not limited herein.

In S103, a recommendation processing parameter is generated based on the initial memory consumption value.

After generating the initial memory consumption value required by the GPU for processing the initial data based on the data characteristics, the recommendation processing parameter may be generated based on the initial memory consumption value.

The recommendation processing parameter can be used to optimize the data characteristics of the initial data, so that the memory consumption value of the GPU when processing the optimized initial data is smaller than the initial memory consumption value. In this way, the memory consumption of the GPU when processing data is reduced, and the efficiency of processing data is effectively improved.

For example, it is assumed that the recommendation processing parameter includes parameter A and parameter B. When the recommendation processing parameter is generated based on the initial memory consumption value, a certain mathematical operation can be performed on the initial memory consumption value, to obtain values corresponding to parameter A and parameter B. The corresponding values are the recommendation processing parameter, or the initial memory consumption value can be processed in any other possible way to generate the recommendation processing parameter, as long as the memory consumption value of the GPU when processing the optimized initial data is smaller than the initial memory consumption value, which is not limited herein.

In S104, target data is obtained by processing the initial data based on the recommendation processing parameter.

In the above-mentioned generation of the recommendation processing parameter based on the initial memory consumption value, the initial data may be processed based on the recommendation processing parameter, to obtain the processed initial data, and the processed initial data may be referred to as the target data.

In some embodiments of the disclosure, the recommendation processing parameter may be generated in combination with the above initial memory consumption value, and the recommendation processing parameter may assist in corresponding processing of the initial data, to obtain the target data.

In some embodiments of the disclosure, the initial data is obtained and the data characteristics of the initial data are extracted. Based on the data characteristics, the initial memory consumption value required by the GPU for processing the initial data is generated. The recommendation processing parameter is generated based on the initial memory consumption value. The target data is obtained by processing the initial data based on the recommendation processing parameter, which effectively assist in reducing the memory consumption when the GPU processes data and improving the efficiency of processing data.

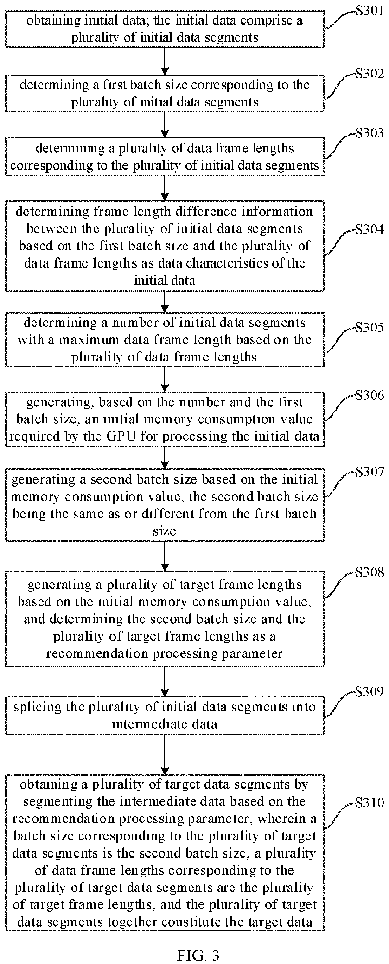

FIG. 3 is a schematic diagram of a second embodiment of the disclosure.

As shown in FIG. 3, for the description of the embodiments in FIG. 3, by combination of FIG. 1, the method includes the following.

In S301, initial data is obtained, where the initial data include a plurality of initial data segments.

The plurality of initial data segments are obtained by segmenting the initial data. The schematic diagrams of the initial data and the plurality of data segments can be specifically shown in the above-mentioned FIG. 2a and FIG. 2b.

For the specific description of S301, reference may be made to the foregoing embodiments, and details are not repeated herein.

In S302, a first batch size corresponding to the plurality of initial data segments is determined.

The number of the plurality of initial data segments may be referred to as the first batch size.

For example, if the initial data include initial data segment a and initial data segment b, the first batch size may be 2. The first batch size shown in FIG. 2a or 2b may be, for example, 4.

In some embodiments, after the initial data is obtained, the initial data may be segmented into the plurality of initial data segments, and then the first batch size corresponding to the plurality of initial data segments may be determined.

In S303, a plurality of data frame lengths corresponding to the plurality of initial data segments are determined respectively.

After the first batch size corresponding to the plurality of initial data segments is determined, the plurality of data frame lengths corresponding to the plurality of initial data segments can be determined.

For example, the initial data include initial data segment a and initial data segment b, and the frame length corresponding to initial data segment a and the frame length corresponding to initial data segment b respectively, may be referred to as the data frame lengths.

In S304, frame length difference information between the plurality of initial data segments is determined based on the first batch size and the plurality of data frame lengths as data characteristics of the initial data.

After determining the first batch size of the plurality of initial data segments, and determining the plurality of data frame length corresponding to the plurality of initial data segments, the frame length difference information between the plurality of initial data segments can be determined based on the first batch size and the plurality of data frame lengths, and the frame length difference information can be determined as the data characteristics of the initial data.

In some embodiments of the disclosure, the number of the plurality of initial data segments is determined as the first batch size, the data frame lengths corresponding to the plurality of initial data segments are determined respectively, and then the frame length difference information is determined based on the first batch size corresponding to the plurality of initial data segments and the plurality of data frame lengths. Therefore, the frame length difference information between different initial data segments can be determined accurately and rapidly, and the credibility of the frame length difference information is improved to a large extent, and the data processing efficiency is also improved.

In S305, a number of initial data segments with a maximum data frame length is determined based on the plurality of data frame lengths.

After determining the frame length difference information between the plurality of initial data segments based on the first batch size and the plurality of data frame lengths, the frame length difference information between the plurality of initial data segments is determined as the data characteristics of the initial data, the number of initial data segments with the maximum data frame length is determined based on the plurality of data frame lengths.

For example, the initial data include initial data segment a, initial data segment b, initial data segment c and initial data segment d, and the data frame lengths corresponding to initial data segment a, initial data segment b, initial data segment c and initial data segment d are: 128, 156, 256, 256. The maximum data frame length is 256, and the data frame lengths of initial data segment c and initial data segment d are both the maximum data frame length, and then the number of data segments corresponding to initial data segment c and initial data segment d is 2.

In S306, based on the number and the first batch size, an initial memory consumption value required by the GPU for processing the initial data is generated.

After determining the number of initial data segments with the maximum data frame length based on the plurality of data frame lengths, based on the number and the first batch size, the initial memory consumption value required by the GPU for processing the initial data is generated.

In some embodiments, after the first batch size and the number of data segments with the the maximum data frame length in the initial data segments are determined, it is to calculate the initial memory consumption value required by the GPU for processing the initial data according to some mathematical operations. The operation can be shown in the following formula:

$$cost = batch\text{-}size * (max\_length^{\wedge}n);$$

where cost is the initial memory consumption value, batch-size is the first batch size, and $max\_length^{\wedge}n$ is the number of data segments with the maximum data frame length in the initial data segments.

By determining the number of data segments with the maximum data frame length in the initial data segments, the initial memory consumption value required by the GPU for processing the initial data is generated based on the first batch size and the number. Thus, the initial memory consumption value when the GPU processes the plurality of initial data segments can be calculated accurately, which effectively assists in improving the efficiency of processing data.

In S307, a second batch size is generated based on the initial memory consumption value, the second batch size being the same as or different from the first batch size.

After generating the initial memory consumption value required by the GPU for processing the initial data based on the first batch size and the number, the second batch size can be generated based on the initial memory consumption value, and the second batch size may be the same as or different from the first batch size.

The second batch size refers to the batch size corresponding to the data segments (the obtained data segment can be called the target data segment, and the plurality of target data segments are combined together to obtain the following target data) obtained after corresponding processing of the initial data.

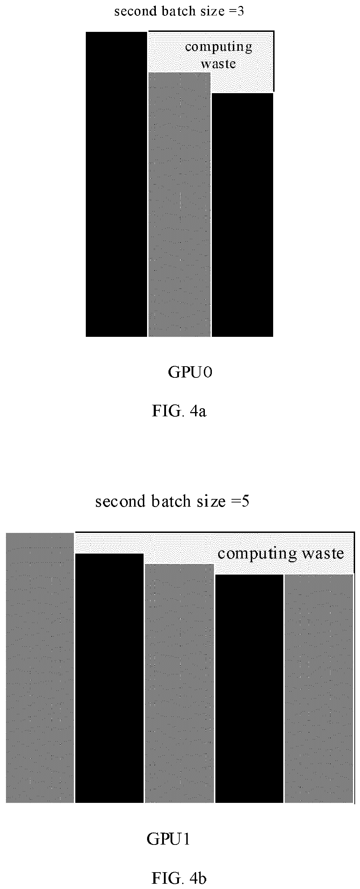

As shown in FIG. 2a and FIG. 2b, the first batch size corresponding to the plurality of initial data segments in FIG. 2a and FIG. 2b is 4, in combination with FIG. 4a and FIG. 4b.

FIG. 4a is a schematic diagram of target data according to some embodiments of the disclosure. The target data includes 3 target data segments. The second batch size corresponding to the 3 target data segments is 3, and different target data segments correspond to different data frame lengths. Compared with frame lengths of the initial data segments of FIG. 2a and FIG. 2b, the difference between the data frame lengths corresponding to the 3 target data segments is small, and the target data corresponds to GPU 0. 0 may be referred to as the serial number of the GPU. The initial data corresponds to one GPU, which means that GPU 0 can be used to process the 3 target data segments included in the target data.

FIG. 4b is another schematic diagram of target data according to some embodiments of the disclosure. The target data includes 5 target data segments. The second batch size corresponding to the 5 target data segments is 5, and different target data segments correspond to different data frame lengths. Compared with frame lengths of the initial data segments of FIG. 2a and FIG. 2b, the difference between the data frame lengths corresponding to the 5 target data segments is small, and the target data corresponds to GPU 1. 1 may be referred to as the serial number of the GPU. The initial data corresponds to one GPU, which means that GPU 1 can be used to process the 5 target data segments included in the target data.

It can be known from FIG. 4a and FIG. 4b, in some embodiments, when the GPU processes the initial data based on the initial memory consumption value, by generating the second batch size, the target data is obtained by allocating target data segments with small frame length differences to different GPUs. In this way, in the subsequent data processing process, the computing amount required to complete the target data segments is relatively small, so that the memory consumption of the GPU can be reduced.

In S308, a plurality of target frame lengths are generated based on the initial memory consumption value, and the second batch size and the plurality of target frame lengths are determined as the recommendation processing parameter.

After the second batch size is generated based on the initial memory consumption value, the plurality of target frame lengths are generated based on the initial memory consumption value, and the second batch size and the plurality of target frame lengths are determined as the recommendation processing parameter.

The second batch size can be the number of target data segments obtained when segmenting the initial data, and the target frame length is the reference frame length used when segmenting to obtain the target data segments. That is, when obtaining the plurality of target data segments based on the second batch size and the plurality of target frame lengths, the initial data can be processed to obtain the plurality of target data segments of the target frame length with the second batch size and the data frame lengths.

That is, in some embodiments of the disclosure, the data frame length of the number of data segments included in the initial data may be re-allocated based on the initial memory consumption value to obtain allocated data segments, which may be called target data segments, and the above second batch size and the plurality of target frame lengths can be referred to as the recommendation processing parameter.

The second batch size is generated based on the initial memory consumption value, the second batch size is the same as or different from the first batch size, and then based on the initial memory consumption value, the plurality of target frame lengths corresponding to the plurality of data frame lengths are generated. The second batch size and the plurality of target frame lengths are determined as the recommendation processing parameter, so that the recommendation processing parameter with the higher reference value can be provided for the corresponding data processing process. When the GPU processes the plurality of target data segments, the lower memory consumption is achieved, and the relatively simple manner is adopted to obtain the recommendation processing parameter, which can avoid the influence of the data calculation process on the actual data processing process and improve the overall execution efficiency of the data processing method, to satisfy a variety of data processing application scenarios with high timeliness requirements.

In S309, the plurality of initial data segments are spliced into intermediate data.

For example, if the plurality of initial data segments can be obtained by segmenting the initial data, the plurality of initial data segments are spliced into the intermediate data when processing the initial data, at first, for example, the splicing is adopted in the manner of connecting an end of a segment with a lead of the next segment or the initial data directly obtained in the initial stage may be used as the intermediate data, which is not limited herein.

In S310, a plurality of target data segments are obtained by segmenting the intermediate data based on to the recommendation processing parameter. A batch size corresponding to the plurality of target data segments is the second batch size, a plurality of data frame lengths corresponding to the plurality of target data segments are the plurality of target frame lengths, and the plurality of target data segments together constitute the target data.

Based on the initial memory consumption value, the plurality of target frame lengths corresponding to the plurality of data frame lengths are generated respectively, and after determining the second batch size and the plurality of target frame lengths as the recommendation processing parameter, the initial data is segmented based on the recommendation processing parameter to obtain the plurality of target data segments.

That is, by segmenting the initial data based on the recommendation processing parameter, the memory consumption when the GPU processes the plurality of target data segments is smaller than the initial memory consumption.

In some embodiments of the disclosure, by splicing the plurality of initial data segments into the intermediate data, the intermediate data is segmented based on the recommendation processing parameter, to obtain the plurality of target data segments. Therefore, the corresponding data processing process can be accurately implemented according to the recommendation processing parameter.

For example, the initial data include initial data segment a and initial data segment b. The corresponding frame lengths are 50 and 120. The first batch size is 2 and the plurality of initial data frame lengths are 128 and 256. Initial data segment a and initial data segment b can be spliced together to obtain the intermediate data. The second batch size obtained based on the initial memory consumption value is 3, and the 3 target frame lengths are 40, 60, and 70. With reference to the recommendation processing parameter, the intermediate data is segmented into 3 target data segments, and the target frame lengths corresponding to the 3 target data segments are 40, 60 and 70. Since the frame length difference information between 40, 60, and 70 is smaller than the frame length difference information between 50 and 120, some alignment operation processing logic is avoided, thereby reducing the memory consumption of the GPU.

It should be noted that embodiments of the disclosure can be applied to an application scenario of a single GPU, or can be applied to a process in which a plurality of application processors run and process in parallel. When the application is processed in parallel by the plurality of application processors, the above-mentioned initial data may be one or more. For the data processing process of each GPU, the methods described in the above embodiments of the disclosure can be used. While reducing the memory consumption of the single GPU, it can also effectively ensure that the amounts of data calculation corresponding to the plurality of GPUs is the same, and avoid the situation of GPU waiting during the synchronous training of the plurality of GPUs. When the GPU trains the model, the model training efficiency is effectively improved.

In some embodiments, the plurality of initial data segments are obtained by segmenting the initial data and the frame length difference information between the initial data segments is determined as the data characteristics of the initial data, which can assist in accurately estimating the initial memory consumption value required by the GPU for processing the initial data, and assist in generating the recommendation processing parameter. By determining the number of the plurality of initial data segments as the first batch size, determining the data frame lengths corresponding to the plurality of initial data segments, and determining the frame length difference information based on the first batch size corresponding to the initial data segments and the plurality of data frame lengths, the frame length difference information between different initial data segments can be determined accurately and rapidly, and the credibility of the frame length difference information is improved to a large extent, and the data processing efficiency is also improved. The number of data segments with the maximum data frame length is determined, and the initial memory consumption value required by the GPU for processing the initial data is generated based on the first batch size and the number of data segments, so that the initial memory consumption value when the GPU processes the plurality of initial data segments can be calculated accurately, and the second batch size is generated based on the initial memory consumption value. Then, based on the initial memory consumption value, the plurality of target frame lengths corresponding to the plurality of data frame lengths are generated, and the second batch size and the plurality of target frame lengths are determined as the recommendation processing parameter. Therefore, the recommendation processing parameter with the high reference value can be provided for the corresponding data processing process, so that when the GPU processes the plurality of target data segments, the low memory consumption is achieved. In addition, the relatively simple manner is adopted to obtain the recommendation processing parameter, which can avoid the influence of the data calculation process on the progress of the actual data processing process, thereby satisfying a variety of data processing application scenarios with high timeliness requirements. The plurality of initial data segments are spliced into the intermediate data, and the intermediate data is segmented based on the recommendation processing parameter, to obtain the plurality of target data segments, so that the corresponding data processing process can be accurately implemented based on the recommendation processing parameter.

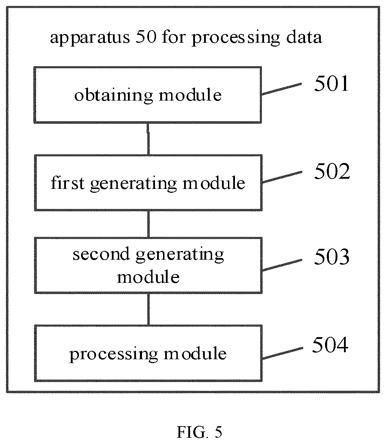

FIG. 5 is a schematic diagram of a third embodiment according to the disclosure.

As shown in FIG. 5, the apparatus 50 for processing data includes an obtaining module 501, a first generating module 502, a second generating module 503 and a processing module 504.

The obtaining module 501 is configured to obtain initial data and extract data characteristics of the initial data.

The first generating module 502 is configured to generate, based on the data characteristics, an initial memory consumption value required by a graphics processing unit (GPU) for processing the initial data.

The second generating module 503 is configured to generate a recommendation processing parameter based on the initial memory consumption value.

The processing module 504 is configured to obtain target data by processing the initial data based on the recommendation processing parameter.

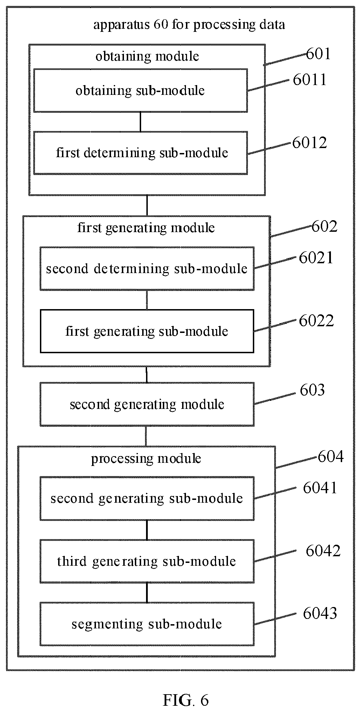

In some embodiments of the disclosure, FIG. 6 is a schematic diagram according to a fourth embodiment of the disclosure, as shown in FIG. 6, the apparatus 60 for processing data includes an obtaining module 601, a first generating module 602, a second generating module 603 and a processing module 604.

The obtaining module 601 includes an obtaining sub-module 6011 and a first determining sub-module 6012.

The obtaining sub-module 6011 is configured to obtain the initial data.

The first determining sub-module 6012 is configured to determine frame length difference information between the plurality of initial data segments as the data characteristics of the initial data.

In some embodiments of the disclosure, the first determining sub-module 6012 is specifically configured to: determine a first batch size corresponding to the plurality of initial data segments; determine a plurality of data frame lengths corresponding to the plurality of initial data segments; and determine the frame length difference information between the plurality of initial data segments based on the first batch size and the plurality of data frame lengths.

In some embodiments of the disclosure, the first generating module 602 includes a second determining sub-module 6021 and a first generating sub-module 6022.

The second determining sub-module 6021 is configured to determine a number of initial data segments with a maximum data frame length based on the plurality of data frame lengths.

The first generating sub-module 6022 is configured to generate, based on the number and the first batch size, the initial memory consumption value required by the GPU for processing the initial data.

In some embodiments of the disclosure, the processing module 604 includes a second generating sub-module 6041 and a third generating sub-module 6042.

The second generating sub-module 6041 is configured to generate a second batch size based on the initial memory consumption value, the second batch size being the same as or different from the first batch size.

The third generating sub-module 6042 is configured to generate a plurality of target frame lengths based on the initial memory consumption value, and determine the second batch size and the plurality of target frame lengths as the recommendation processing parameter.

In some embodiments of the disclosure, the processing module 604 further includes a segmenting sub-module 6043, configured to splice the plurality of initial data segments into intermediate data and obtain a plurality of target data segments by segmenting the intermediate data based on the recommendation processing parameter, in which a batch size corresponding to the plurality of target data segments is the second batch size, a plurality of data frame lengths corresponding to the plurality of target data segments are the plurality of target frame lengths, and the plurality of target data segments together constitute the target data.

It is understood that the apparatus 60 for processing data in FIG. 6 in some embodiments and the apparatus 50 for processing data in some embodiments, the obtaining module 601 and the obtaining module 501 in the above embodiments, the first generating module 602 and the first generating module 502 in the above embodiments, the second generating module 603 and the second generating module 503 in the above embodiments, and the processing module 604 and the processing module 504 in the above embodiments have the same function and structure.

It should be noted that, the foregoing explanation on the method for processing data is also applicable to the apparatus for processing data, which is not repeated herein.

In some embodiments of the disclosure, the initial data is obtained, and the data characteristics of the initial data are extracted. Based on the data characteristics, the initial memory consumption value required by the GPU for processing the initial data is generated. The recommendation processing parameter is generated based on the initial memory consumption value. The target data is obtained by processing the initial data based on the recommendation processing parameter. This solution can effectively assist in reducing the memory consumption of the GPU when processing the data, and effectively improve the efficiency of processing data.

According to some embodiments, the disclosure also provides an electronic device, a readable storage medium and a computer program product.

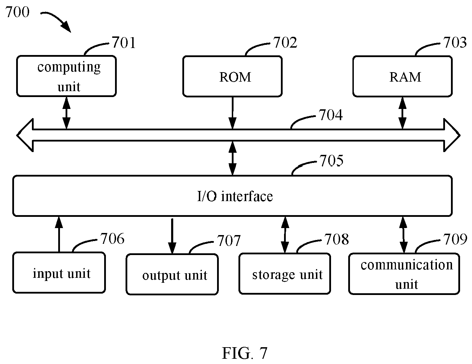

FIG. 7 is a block diagram of an electronic device for performing a method for processing data according to some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 7, the device 700 includes a computing unit 701 performing various appropriate actions and processes based on computer programs stored in a read-only memory (ROM) 702 or computer programs loaded from the storage unit 708 to a random access memory (RAM) 703. In the RAM 703, various programs and data required for the operation of the device 700 are stored. The computing unit 701, the ROM 702, and the RAM 703 are connected to each other through a bus 704. An input/output (I/O) interface 705 is also connected to the bus 704.

Components in the device 700 are connected to the I/O interface 705, including: an inputting unit 706, such as a keyboard, a mouse; an outputting unit 707, such as various types of displays, speakers; a storage unit 708, such as a disk, an optical disk; and a communication unit 709, such as network cards, modems, and wireless communication transceivers. The communication unit 709 allows the device 700 to exchange information/data with other devices through a computer network such as the Internet and/or various telecommunication networks.

The computing unit 701 may be various general-purpose and/or dedicated processing components with processing and computing capabilities. Some examples of computing unit 701 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 701 executes the various methods and processes described above, such as the method for processing data. For example, in some embodiments, the method may be implemented as a computer software program, which is tangibly contained in a machine-readable medium, such as the storage unit 708. In some embodiments, part or all of the computer program may be loaded and/or installed on the device 700 via the ROM 702 and/or the communication unit 709. When the computer program is loaded on the RAM 703 and executed by the computing unit 701, one or more steps of the method described above may be executed. Alternatively, in other embodiments, the computing unit 701 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system to solve the problem that there are the defects of difficult management and weak business expansion in the traditional physical hosts and (Virtual Private Server) VPS services. The server may be a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

**Claims**

1. A method for processing data, comprising:

   obtaining (S101) initial data;
   extracting (S101) data characteristics of the initial data;
   generating (SI02), based on the data characteristics, an initial memory consumption value required by a graphics processing unit (GPU) for processing the initial data;
   generating (S103) a recommendation processing parameter based on the initial memory consumption value; and
   obtaining (S104) target data by processing the initial data based on the recommendation processing parameter.

2. The method of claim 1, wherein extracting (S101) the data characteristics of the initial data comprises:

   obtaining a plurality of initial data segments by segmenting the initial data; and
   determining frame length difference information between the plurality of initial data segments as the data characteristics of the initial data.

3. The method of claim 2, wherein determining the frame length difference information between the plurality of initial data segments comprises:

   determining (S302) a first batch size corresponding to the plurality of initial data segments; determining (S303) a plurality of data frame lengths corresponding to the plurality of initial data segments; and
determining (S304) the frame length difference information between the plurality of initial data segments based on the first batch size and the plurality of data frame lengths.

4. The method of claim 3, wherein generating (S102), based on the data characteristics, the initial memory consumption value required by the GPU for processing the initial data comprises:

determining (S305) a number of initial data segments with a maximum data frame length based on the plurality of data frame lengths; and
generating (S306), based on the number and the first batch size, the initial memory consumption value required by the GPU for processing the initial data.

5. The method of claim 3 or 4, wherein generating (S103) the recommendation processing parameter based on the initial memory consumption value comprises:

generating (S307) a second batch size based on the initial memory consumption value, the second batch size being the same as or different from the first batch size; and
generating (S308) a plurality of target frame lengths based on the initial memory consumption value, and determining the second batch size and the plurality of target frame lengths as the recommendation processing parameter.

6. The method of claim 5, wherein obtaining (S104) the target data by processing the initial data based on the recommendation processing parameter comprises:

splicing (S309) the plurality of initial data segments into intermediate data; and
obtaining (S310) a plurality of target data segments by segmenting the intermediate data based on the recommendation processing parameter, wherein a batch size corresponding to the plurality of target data segments is the second batch size, a plurality of data frame lengths corresponding to the plurality of target data segments are the plurality of target frame lengths, and the plurality of target data segments together constitute the target data.

7. An apparatus for processing data, comprising:

an obtaining module (501; 601), configured to obtain initial data and extract data characteristics of the initial data;
a first generating module (502; 602), configured to generate, based on the data characteristics, an initial memory consumption value required by a graphics processing unit (GPU) for processing the initial data;
a second generating module (503; 603), configured to generate a recommendation processing parameter based on the initial memory consumption value; and
a processing module (504; 604), configured to obtain target data by processing the initial data based on the recommendation processing parameter.

8. The apparatus of claim 7, wherein the obtaining module (501; 601) comprises:

an obtaining sub-module (6011), configured to obtain the initial data; and
a first determining sub-module (6012), configured to obtain a plurality of initial data segments by segmenting the initial data and determine frame length difference information between the plurality of initial data segments as the data characteristics of the initial data.

9. The apparatus of claim 8, wherein the first determining sub-module (6012) is further configured to:

determine a first batch size corresponding to the plurality of initial data segments;
determine a plurality of data frame lengths corresponding to the plurality of initial data segments; and
determine the frame length difference information between the plurality of initial data segments based on the first batch size and the plurality of data frame lengths.

10. The apparatus of claim 9, wherein the first generating module (502; 602) comprises:

a second determining sub-module (6021), configured to determine a number of initial data segments with a maximum data frame length based on the plurality of data frame lengths; and
a first generating sub-module (6022), configured to generate, based on the number and the first batch size, the initial memory consumption value required by the GPU for processing the initial data.

11. The apparatus of claim 9 or 10, wherein the processing module (504; 604) comprises:

a second generating sub-module (6041), configured to generate a second batch size based on the initial memory consumption value, the second batch size being the same as or different from the first batch size; and
a third generating sub-module (6042), configured to generate a plurality of target frame lengths based on the initial memory consumption value, and determine the second batch size and the plurality of target frame lengths as the recommendation processing parameter.

**12.** The apparatus of claim 11, wherein the processing module (504; 604) further comprises:
a segmenting sub-module (6043), configured to splice the plurality of initial data segments into intermediate data and obtain a plurality of target data segments by segmenting the intermediate data based on the recommendation processing parameter, wherein a batch size corresponding to the plurality of target data segments is the second batch size, a plurality of data frame lengths corresponding to the plurality of target data segments are the plurality of target frame lengths, and the plurality of target data segments together constitute the target data.

**13.** An electronic device, comprising:

at least one processor; and
a memory communicatively coupled to the at least one processor;
wherein, the memory is configured to store instructions executable by the at least one processor, and when the instructions are executed by the at least one processor, the at least one processor is caused to perform the method according to any of claims 1-6.

**14.** A non-transitory computer-readable storage medium storing computer instructions, wherein the computer instructions are configured to cause a computer to perform the method according to any of claims 1-6.

**15.** A computer program product comprising a computer program, wherein when the computer program is executed by a processor, the method according to any of claims 1-6 is performed.

obtaining initial data and extracting data characteristics of the initial data ⎯S101

generating, based on the data characteristics, an initial memory consumption value required by a graphics processing unit (GPU) for processing the initial data ⎯S102

generating a recommendation processing parameter based on the initial memory consumption value ⎯S103

obtaining target data by processing the initial data based on the recommendation processing parameter ⎯S104

FIG. 1

first batch size=4

computing waste

GPU0

FIG. 2a

first batch size =4

computing
waste

GPU1

FIG. 2b

obtaining initial data; the initial data comprise a plurality of initial data segments ⟶ S301

↓

determining a first batch size corresponding to the plurality of initial data segments ⟶ S302

↓

determining a plurality of data frame lengths corresponding to the plurality of initial data segments ⟶ S303

↓

determining frame length difference information between the plurality of initial data segments based on the first batch size and the plurality of data frame lengths as data characteristics of the initial data ⟶ S304

↓

determining a number of initial data segments with a maximum data frame length based on the plurality of data frame lengths ⟶ S305

↓

generating, based on the number and the first batch size, an initial memory consumption value required by the GPU for processing the initial data ⟶ S306

↓

generating a second batch size based on the initial memory consumption value, the second batch size being the same as or different from the first batch size ⟶ S307

↓

generating a plurality of target frame lengths based on the initial memory consumption value, and determining the second batch size and the plurality of target frame lengths as a recommendation processing parameter ⟶ S308

↓

splicing the plurality of initial data segments into intermediate data ⟶ S309

↓

obtaining a plurality of target data segments by segmenting the intermediate data based on the recommendation processing parameter, wherein a batch size corresponding to the plurality of target data segments is the second batch size, a plurality of data frame lengths corresponding to the plurality of target data segments are the plurality of target frame lengths, and the plurality of target data segments together constitute the target data ⟶ S310

FIG. 3

second batch size =3

computing
waste

GPU0

FIG. 4a

second batch size =5

computing waste

GPU1

FIG. 4b

apparatus 50 for processing data

obtaining module — 501

first generating module — 502

second generating module — 503

processing module — 504

FIG. 5

apparatus 60 for processing data

obtaining module —601

obtaining sub-module —6011

first determining sub-module —6012

first generating module —602

second determining sub-module —6021

first generating sub-module —6022

second generating module —603

processing module —604

second generating sub-module —6041

third generating sub-module —6042

segmenting sub-module —6043

FIG. 6

700

701
computing
unit

702
ROM

703
RAM

704

705
I/O interface

706
input unit

707
output unit

708
storage unit

709
communication
unit

FIG. 7

Europäisches
Patentamt
European
Patent Office
Office européen
des brevets

# EUROPEAN SEARCH REPORT

**Application Number**

EP 22 16 0276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/057935 A1 (FOWLER MARK [US]) 10 March 2011 (2011-03-10) * paragraph [0009] * * figure Figure 3 * ----- | 1-15 | INV. G06F9/50 |

**TECHNICAL FIELDS SEARCHED (IPC)**

G06F
G06T

The present search report has been drawn up for all claims

| Place of search | Date of completion of the search | Examiner |
|---|---|---|
| The Hague | 12 July 2022 | Dieben, Marc |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 16 0276

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2022

| Patent document cited in search report | Publication date | Patent family member(s) | Publication date |
|---|---|---|---|
| US 2011057935 A1 | 10-03-2011 | NONE | |

For more details about this annex : see Official Journal of the European Patent Office, No. 12/82